# EUROPÄISCHE PATENTSCHRIFT

(11) **EP 0 525 500 B1**
(45) Veröffentlichungstag und Bekanntmachung des Hinweises auf die Patenterteilung: **26.04.1995**
(21) Anmeldenummer: 92111936.8
(22) Anmeldetag: 14.07.1992
(51) Int. Cl.: G02B 7/182, G02B 26/10

(54) **Vorrichtung zur zweidimensionalen Abtastung einer Oberfläche mit einem Lichtstrahl**
Device for a two-dimensional scanning of a surface by a light ray
Dispositif pour le balayage à deux dimensions d'une surface avec un rayon lumineux

(30) Priorität: 02.08.1991 DE 4125690
(43) Veröffentlichungstag der Anmeldung: 03.02.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Goos, Ralf, Dipl.-Ing., W-4322 Sprockhövel 2 (DE)

(56) Entgegenhaltungen:
- WO-A-79/00018
- DE-A- 2 122 791
- US-A- 4 379 624
- US-A- 4 941 739
- SOVIET INVENTIONS ILLUSTRATED Section PQ, Week 8739, 7 October 1987 DerwentPublications Ltd., London, GB; Class P, AN 87-276195 & SU A 1290231

## Beschreibung

Die Erfindung betrifft eine Vorrichtung zur zweidimensionalen Abtastung einer Oberfläche gemäß dem Oberbegriff des Hauptanspruches.

Eine derartige Vorrichtung ist aus der DE-36 12 751 A1 bekannt. Die Drehvorrichtung des Spiegels um zwei senkrecht aufeinanderstehende Achsen wird mit der beschriebenen Vorrichtung so realisiert, daß die kontinuierliche Rotationsbewegung von einem ersten Motor mittels eines Getriebes auf den Spiegel übertragen wird und die zweite Drehbewegung bzw. Kippbewegung des Spiegels wird durch eine Auf- und Abbewegung einer zweiten Welle über Kipphebel bewirkt. Damit der Spiegel um beide Achsen drehbar bewegt werden kann, ist ein komplizierter, aus mehreren miteinander zusammenwirkenden Hebel, bestehender Kipphebelmechanismus notwendig.

Aus der DE-39 28 562 A1 ist eine weitere Vorrichtung zur Abtastung einer Oberfläche bekannt. Dabei wird die Drehung des Spiegels um die beiden rechtwinklig aufeinanderstehenden Achsen durch zwei Antriebe realisiert, wobei der erste Antrieb raumfest und der zweite Antrieb um eine Drehachse verkippbar angeordnet ist. Im einzelnen ist die Konstruktion derart ausgestaltet, daß ein an einer Winkelhalterung angeordneter Galvanometerversteller die schnellen Drehbewegungen des Spiegels verursacht und daß die andere Dreh- bzw. Verstellbewegung des Spiegels durch einen anderen Motor verursacht wird, welcher die Winkelhalterung verstellt. Diese Konstruktion ist aufwendig, weil mehrere Bauteile benötigt werden und auch hohe Trägheitsmomente auftreten, da an der für die Winkelverstellung des Spiegels zuständigen Winkelhalterung auch ein Antrieb für die andere Rotationsbewegung des Spiegels angeordnet ist. Um die gekoppelte Bewegung des Spiegels, d.h. eine Bewegung des Spiegels um beide Achsen zu realisieren, müssen hohe Massen bewegt werden. Durch die hohen Trägheitsmomente kann die zeilenförmige Scannung nicht realisiert werden. Des weiteren ist es nachteilig, daß die Scanform durch die Auslegung der Hardware (z.B. Scheibe am Motor) einmalig eingestellt wird. Eine Veränderung der Scanform ist nur durch eine Veränderung der Hardware zu erreichen und kann nicht variabel eingestellt werden.

Aufgabe der vorliegenden Erfindung ist es, eine gattungsgemäße Vorrichtung so auszugestalten, daß bei einer preisgünstigen konstruktiv einfachen und gebrauchsvorteilhaften Bauform gewährleistet ist, daß hohe Abtastgeschwindigkeiten erreichbar sind, und daß eine Veränderung der Scanform problemlos erfolgen kann.

Diese Aufgabe ist durch die im Hauptanspruch angegebene Erfindung gelöst. Die Unteransprüche stellen vorteilhafte Weiterbildungen dar.

Die erfindungsgemäße Lösung sieht vor, daß zur Drehung des Spiegels um die auf die optische Achse senkrecht stehende Achse ein zwischen den beiden Antriebsmotoren und dem Spiegel angeordnetes Differentialgetriebe mit zwei miteinander kämmenden Zahnrädern vorgesehen ist und der Spiegel in der mit der Hohlwelle verbundenen Spiegelhalterung drehbar angeordnet ist und daß das eine Zahnrad des Differentialgetriebes am Spiegel befestigt ist und das andere Zahnrad mit der Antriebswelle des ersten Antriebsmotors verbunden ist und mit dem am Spiegel fest angeordnetem Zahnrad kämmt. Diese Lösung bewirkt, daß die Drehzahlunterschiede zwischen den beiden Antrieben unmittelbar eine Winkelverstellung bewirken. Dadurch, daß erfindungsgemäß ohne komplizierte Konstruktion ein kontinuierlich arbeitendes Differentialgetriebe vorgesehen ist, ist eine hohe Genauigkeit der Rotationsbewegung des Spiegels gegeben sowie eine hohe Genauigkeit der Winkelverstellbarkeit desselben gewährleistet. Der Spiegel besitzt eine sehr geringe Masse, womit der schnelle Scanvorgang begünstigt wird. Weiterhin ist der Spiegel dünn ausgestaltet und für den Wellenbereich der abzulenkenden Strahlung optimiert. Eine Oberfläche kann nicht nur mit Lichtstrahlen, sondern auch mitanderen elektromagnetischen Wellen abgetastet werden.

Vorteilhafterweise ist das Differentialgetriebe so ausgestaltet, daß zwei Kegel-Zahnräder miteinander kämmen.

Die Drehzahlen des zweiten Motors werden auf die Spiegelhalterung über einen Zahnriemen und ein Ritzel übertragen. Die Spiegelhalterung ist ihrerseits der Welle des ersten Antriebes räumlich fest zugeordnet.

Die Drehzahlübertragung des ersten Antriebes auf die Spiegelhalterung kann mit einem formschlüssigen oder einem kraftschlüssigen Antriebselement erfolgen.

Es ergibt sich folgendes Funktionsprinzip: Sind die Drehzahlen der beiden Motoren gleich, so liegt keine Drehzahldifferenz vor, und der Spiegel führt nur eine Drehbewegung um seine Rotationsachse aufgrund des Antriebes durch den ersten Motor aus. Liegt eine Drehzahldifferenz zwischen den beiden Motoren vor, so bewirkt das Differentialgetriebe, daß eine Relativbewegung zwischen den beiden Zahnrädern stattfindet und somit wird der Spiegel in seiner Winkelneigung verstellt. Vorteilhaft dabei ist, daß unterschiedlichste Abtastmuster realisiert werden können, wobei die Änderung der Abtastmuster kontinuierlich und über die abzutastende Fläche unterschiedlich erfolgen kann. Dabei ist nur eine einzige Regelgröße zur Abtastmusteränderung notwendig, und zwar die Drehzahländerung zwischen den beiden Antrieben. Die Vorrichtung ist damit funktionell ausgestaltet.

Jeder Scanantrieb benötigt zur Richtungsbestimmung des abgelenkten Lichtstrahles die genaue Winkellage des Spiegels. Für diese Lagebestimmung des Spiegels im Raum gibt es unterschiedliche Verfahren. Bei Verwendung eines Schrittmotors muß zunächst eine Referenzierung durchgeführt werden. Dann kann über die Motorsteuerung (durch Zählen der Schrittimpulse) die Winkelposition im Rahmen der Schrittmotorauflösung angefahren werden. Ist die absolute Position der Motoren bekannt, so ist auch die Spiegelposition bekannt. In der vorliegenden Ausführungsform werden zur Positionsbestimmung Inkrementalgeber mit Referenzmarken verwendet, die eine möglichst spielfreie Drehbewegungsübertragung auf die beiden Spiegelachsen (also das Differentialgetriebe) aufweisen.

Die erfindungsgemäße Vorrichtung kann vorteilhafterweise als Ablenkeinrichtung für elektromagnetische Wellen verwendet werden. Insbesondere können Mikrowellen oder Lichtwellen abgelenkt werden.

Ein Ausführungsbeispiel der erfindungsgemäßen Vorrichtung ist in den nachfolgenden Figuren dargestellt. Es zeigen:

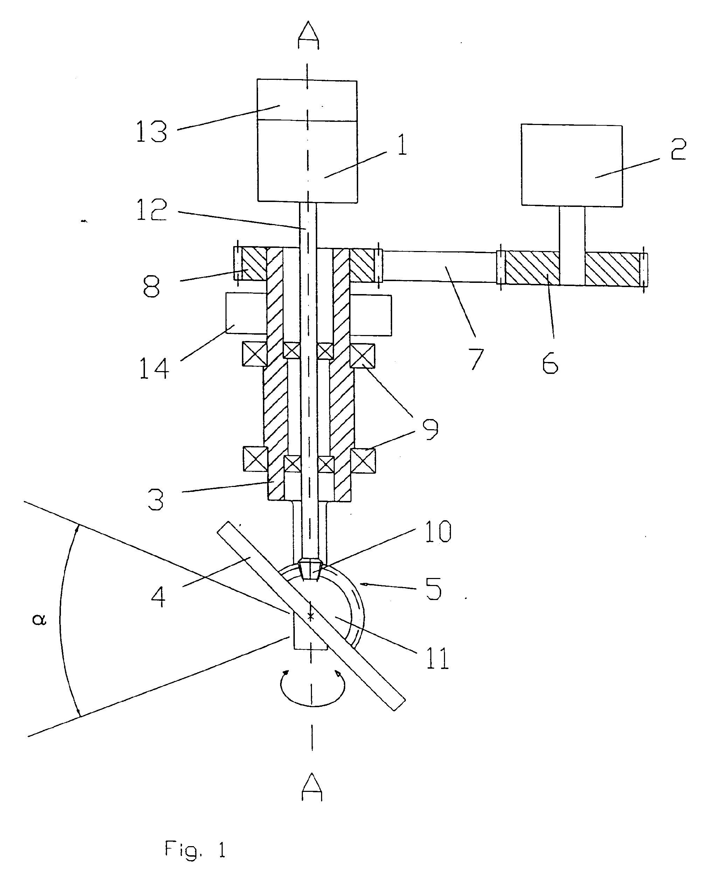

- Fig. 1: eine teilweise geschnittene Seitenansicht der erfindungsgemäßen Vorrichtung;

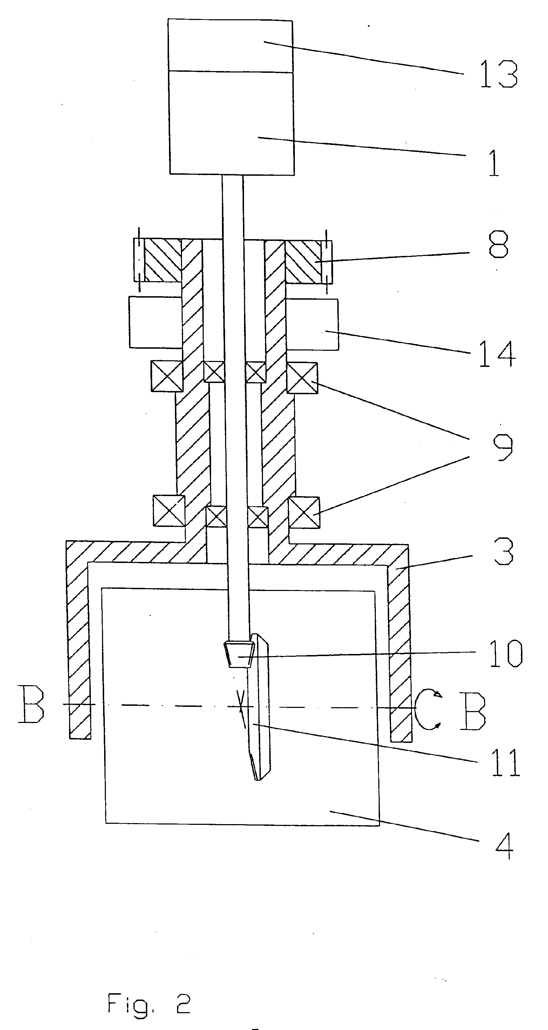

- Fig. 2: einen Schnitt durch die erfindungsgemäße Vorrichtung der Fig. 1.

Die erfindungsgemäße Vorrichtung zur zweidimensionalen Abtastung einer Oberfläche weist einen ersten Antriebsmotor 1, einen zweiten Antriebsmotor 2, einen in einer Halterung 3 angeordneten Spiegel 4 und ein Differentialgetriebe 5 auf. Die Welle des Antriebsmotors 2 ist über ein Ritzel 6 und einen Zahnriemen 7 mit einer Antriebsscheibe 8 verbunden, welche den Spiegelhalter 3 antreibt. Der Spiegelhalter 3 ist in den Lagerungen 9 drehbar gelagert. Das Differentialgetriebe 5 besteht aus einem kleinen Kegelrad 10 und einem mit diesem kämmenden großen Kegelrad 11. Das große Kegelrad 11 ist an dem Spiegel 4 befestigt. Das kleine Kegelrad 10 ist an der Antriebswelle 12 des Motors 1 angeordnet. Der Spiegel 4 ist in dem Spiegelhalter 3 drehbar um die Achse B-B angeordnet. Den Antriebsmotoren 1 und 2 sind je ein Inkrementalgeber/Winkeldecoder 13, 14 zugeordnet.

Es ergibt sich folgende Wirkungsweise:
Zwecks Abtastung einer Oberfläche mit einem Lichtstrahl wird z.B. ein Laserstrahl auf die Spiegeloberfläche gerichtet. Durch die Rotationsbewegung des Spiegels 4 um die optische Achse A-A des Lichtstrahles und die Drehbewegung des Spiegels 4 um eine zu der optischen Achse A-A senkrechte Achse B-B wird die Winkelneigung des Spiegels 4 und somit der Azimuthwinkel verändert. Durch diese zwei Bewegungen des Spiegels 4 kann eine Oberfläche nach einem beliebigen Abtastmuster abgetastet werden. Die Rotationsbewegung des Spiegels 4 um die Achse A-A wird durch den Antriebsmotor 2 verursacht. Das kleine Kegelrad 10 der Antriebswelle 12 des Motors 1 kämmt mit dem großen Kegelrad 11. Sind die Drehzahlen der beiden Antriebsmotoren 1 und 2 gleich, so ergibt sich eine Rotation des Spiegels 4 bei einem fest eingestellten Azimuthwinkel α. Ist eine Winkelverstellung des Spiegels 4 beabsichtigt, so geschieht dies durch eine Drehzahldifferenz zwischen den beiden Motoren 1 und 2. Die unterschiedlichen Drehzahlen der Motoren 1 und 2 führen zu einer Relativbewegung zwischen dem großen und dem kleinen Kegelrad 11, 10, wodurch es zu einer Azimuthwinkelverstellung bei gleicher Rotationsdrehzahl kommt. Die Rotationsbewegung des Spiegels 4 um seine Drehachse B-B kann auch durch eine oszillierende Bewegung desselben ersetzt werden.

Nach jedem Einschaltvorgang muß zunächst eine Referenzierfahrt durchgeführt werden, die wie folgt abläuft: Zunächst werden beide Motoren mit gleicher Geschwindigkeit angetrieben. Nachdem die Referenzmarke des Inkrementalgebers 14 (der Achse die durch Motor 2 angetrieben wird) detektiert wird, stoppt Motor 2 und hält diese Position. Motor 1 dreht jetzt bis zur Referenzmarke seines Inkrementalgebers 13. Jetzt ist die Vorrichtung referiert und die Winkelposition des Spiegels definiert. Der Drehwinkel des Spiegels wird jetzt über den Inkrementalgeber 14 von Motor 2 bestimmt, während der Elevationswinkel durch die Differenz der Inkrementalgeber 13 und 14 bestimmt wird. Jeder Drehwinkelposition wird nun in jedem Bewegungsablauf ein Elevationswinkel zugewiesen.

Die Übersetzung der Getriebestufe 5 bestimmt in Verbindung mit den ausgewählten Motoren die kleinste Einheit der Winkelverstellung der Spiegelachse B-B.

## Patentansprüche

1. Vorrichtung zur zweidimensionalen Abtastung einer Oberfläche mit einem Lichtstrahl, mit einem um zwei senkrecht aufeinanderstehende Achsen drehbaren Spiegel, wobei die eine Achse eine optische Achse (A-A) ist, entlang welcher ein von einer Lichtquelle ausgesandter Lichtstrahl verläuft, und mit zwei Antriebsmotoren (1, 2) für die Drehbewegungen des Spiegels (4), wobei die kontinuierliche Drehbewegung des Spiegels (4) um die optische Achse (A-A) von dem zweiten Antriebsmotor (2) auf den Spiegel (4) über ein Getriebe übertragen wird, welches einen Zahnriemen (7) und eine mit diesem zusammenwirkende und an einer mit einer Spiegelhalterung (3) verbundenen Hohlwelle angeordnete Antriebsscheibe (8) enthält, **dadurch gekennzeichnet**, daß zur Drehung des Spiegels (4) um die auf die optische Achse (A-A) senkrecht stehende Achse (B-B) ein zwischen den beiden Antriebsmotoren (1, 2) und dem Spiegel (4) angeordnetes Differentialtriebe (5) mit zwei miteinander kämmenden Zahnrädern (10, 11) vorgesehen ist, und der Spiegel (4) in der mit der Hohlwelle verbundenen Spiegelhalterung (3) um die Achse (B-B) drehbar angeordnet ist, und daß das eine Zahnrad (11) des Differentialgetriebes (5) am Spiegel (4) befestigt und das andere Zahnrad (10) mit der Antriebswelle (12) des ersten Antriebsmotors (1) verbunden ist und mit dem am Spiegel (4) fest angeordneten Zahnrad (11) kämmt.

2. Vorrichtung nach Anspruch 1, **dadurch gekennzeichnet**, daß die Zahnräder Kegelräder (10,11) sind mit einer Verzahnungsgeometrie, die ein geringes Spiel aufweist.

3. Vorrichtung nach Anspruch 1, **dadurch gekennzeichnet**, daß die Drehzahlübertragung des zweiten Antriebes (2) auf die Spiegelhalterung (3) mit einem kraftschlüssigen Element erfolgt.

4. Vorrichtung nach einem der Ansprüche 1 bis 3, **dadurch gekennzeichnet**, daß die Drehzahlübertragung des ersten Antriebes (1) auf das andere Zahnrad (10) mit einem formschlüssigen oder kraftschlüssigen Antriebselement erfolgt.

5. Vorrichtung nach einem oder mehreren der vorangegangenen Ansprüche, **dadurch gekennzeichnet**, daß Inkrementalgeber (13, 14) mit Referenzmarken vorgesehen sind zur Referenzierung der Spiegelposition.

6. Verwendung der Vorrichtung nach einem oder mehreren der vorangegangenen Ansprüche als Ablenkeinrichtung für elektromagnetische und akustische Wellen.

## Claims

1. A device for the two-dimensional scanning of a surface with a beam of light, comprising a mirror rotatable about two axes at right angles to one another, one axis being an optical axis (A-A), along which a beam of light emitted by a light source extends, and comprising two drive motors (1, 2) for the rotary movements of the mirror (4), the continuous rotary movement of the mirror (4) about the optical axis (A-A) being transmitted by the second drive motor (2) to the mirror (4) via a transmission comprising a toothed belt (7) and a drive disc (8) co-operating therewith and disposed on a hollow shaft connected to a mirror mount (3), characterised in that a differential gear (5) with two intermeshing gearwheels (10, 11) is provided to rotate the mirror (4) about the axis (B-B) at right angles to the optical axis (A-A), said differential gear (5) being disposed between the two drive motors (1, 2) and the mirror (4), and the mirror (4) is disposed for rotation about the axis (B-B) in the mirror mount (3) connected to the hollow shaft, and in that one gearwheel (11) of the differential gear (5) is fixed on the mirror (4) and the other gearwheel (10) is connected to the drive shaft (12) of the first drive motor (1) and meshes with the gearwheel (11) fixed on the mirror (4).

2. A device according to claim 1, characterised in that the gearwheels are bevel gearwheels (10, 11) with a toothing geometry having a slight play.

3. A device according to claim 1, characterised in that the transmission of the speed of rotation of the second drive (2) to the mirror mount (3) is made by way of a non-positive element.

4. A device according to any one of claims 1 to 3, characterised in that the transmission of the speed of rotation of the first drive (1) to the other gearwheel (10) is made by way of a positive or non-positive drive element.

5. A device according to one or more of the preceding claims, characterised in that incremental sensors (13, 14) are provided with reference marks for referencing the mirror position.

6. Use of the device according to one or more of the preceding claims as a deflection device for electromagnetic and acoustic waves.

## Revendications

1. Dispositif pour le balayage en deux dimensions d'une surface à l'aide d'un rayon lumineux, avec un miroir tournant autour de deux axes perpendiculaires l'un sur l'autre, l'un des axes étant un axe optique (A-A) correspondant au faisceau lumineux émis par une source lumineuse ainsi que deux moteurs (1, 2) pour les mouvements de rotation du miroir (4), le mouvement de rotation continu du miroir (4) autour de l'axe optique (A-A) étant transmis par le second moteur (2) au miroir (4) par une transmission comprenant une courroie crantée (7) et un disque d'entraînement (8) coopérant avec la courroie, ce disque étant monté sur un arbre creux relié à un support de miroir (3), dispositif caractérisé en ce que pour tourner le miroir (4) autour de l'axe (B-B) perpendiculaire à l'axe optique (A-A), il y a un différentiel (5) monté entre les deux moteurs (1, 2) et le miroir (4) avec deux roues dentées (10, 11) qui engrènent, et le miroir (4) est monté à rotation autour de l'axe (B-B) dans le support de miroir (3) relié à l'arbre creux, et une roue dentée (11) du différentiel (5) étant fixée au miroir (4) et l'autre roue dentée (10) est reliée à l'arbre d'entraînement (12) du premier moteur (1) et engrène avec la roue dentée (11) solidaire du miroir (4).

2. Dispositif selon la revendication 1, caractérisé en ce que les roues dentées sont des roues coniques (10, 11) ayant une géométrie de dents présentant un faible jeu.

3. Dispositif selon la revendication 1, caractérisé en ce que la transmission de la vitesse de rotation du second moteur (2) au support (3) du miroir se fait par un élément présentant une liaison par la force.

4. Dispositif selon l'une des revendications 1 à 3, caractérisé en ce que la transmission de la vitesse de rotation du premier moteur (1) à l'autre roue dentée (10) se fait par un élément d'entraînement avec liaison par la forme ou liaison par la force.

5. Dispositif selon une ou plusieurs des revendications précédentes, caractérisé en ce que des émetteurs incrémentiels (13, 14) sont prévus avec des traits de repère pour référencer la position du miroir.

6. Utilisation du dispositif selon une ou plusieurs des revendications précédentes comme dispositif de déviation pour des ondes électromagnétiques et acoustiques.
